# EUROPEAN PATENT SPECIFICATION

(11) **EP 1 624 550 B1**
(45) Date of publication and mention of the grant of the patent: **10.01.2007**
(21) Application number: 05254439.2
(22) Date of filing: 15.07.2005
(51) Int. Cl.: H02K 11/02, H01R 13/719

(54) **Carrier for suppression chip**
Träger für Unterdrückungschip
Support pour une puce de suppression

(30) Priority: 02.08.2004 GB 0417204
(43) Date of publication of application: 08.02.2006
(73) Proprietor: ITT MANUFACTURING ENTERPRISES, INC., Wilmington, Delaware 19801 (US)
(72) Inventor: Jordan, Peter, Itt Industries, Basingstoke, Hants RG22 4BA (GB)
(74) Representative: Ertl, Nicholas Justin

(56) References cited:
- EP-A- 1 193 839
- US-A- 5 360 353
- US-B1- 6 232 684
- US-B1- 6 473 291

## Description

This invention relates to a carrier for an electromagnetic interference (EMI) suppression chip, particularly for use in electric motors.

Low-pass EMI filters are well established in applications requiring suppression of conducted electromagnetic interference. Such filters are designed to combine capacitance or capacitance/inductance with rugged mechanical construction. In the past, tubular capacitors have been widely used in EMI filters, although more recently a multilayer capacitor has become more widespread.

Multilayer capacitors are particularly suitable when high capacitance is required or when the mechanical profile must be low. The demand for improvements for surface mount chip capacitors has forced huge leaps forward in multilayer technology, and the benefits of this are now being realised in EMI filters.

Multilayer capacitors are used because they allow high capacitance per unit volume to be achieved. This ability allows specified capacitance to be produced using stable dielectric materials. The electrode structure is buried in the material of the chip, so that the withstand voltages are dependent on the dielectric strength of the ceramic chip material and are therefore very high.

An example of one known use of an EMI filter is for interference suppression within a motor housing. The best place to position a filter is in the wall of a Faraday cage, and it is known to mount such filters directly within conductive outer casings for motors, for example for use in automotive applications.

The use of DC motors in such automotive applications has increased dramatically in recent years. There may be as many as 100 motors in a luxury automobile. The RF emissions of DC motors are a significant problem, as an electrical motor is a noisy RF source that can easily interfere with other electronic devices through common and differential mode noise on the power lines. For noise above a certain frequency on the power lines, the power lines tend to act as an antenna and radiate energy into free space. Substantial RF noise is generated from a small DC motor by the high speed switching which occurs at angular velocities as high as 24,000 rpm at 12 V DC. EMI filters are used to suppress the RF noise at the source.

One known layout for a chip capacitor EMI filter comprises a rectangular casing, with connections at each end wall and connections at opposite side walls. These connections are for example tin-lead coating layers. This chip is typically soldered into a carrier provided with the motor housing. Document US-A-5 360 353 discloses a known carrier device and is used to draft the preamble of claim 1.

In motor applications, there are particularly harsh environmental demands, and the installation must be able to withstand large thermal shock as well as mechanical vibration. The conventional mounting technique may not meet these demands.

According to the invention, there is provided a carrier device for carrying an electromagnetic suppression chip, the device comprising:
a container having four side walls and an open top, the open top for receiving a suppression chip into the container; and
a plurality of spring clips, each spring clip being associated with a respective side wall, and each spring clip having an inner face for contact with a lateral contact terminal of the suppression chip and an outer face for contact with a terminal external to the carrier device, the carrier device being adapted to be received as a push fit into a housing which defines the external terminals.

The carrier device of the invention provides a container for receiving a suppression chip with a push fit connection. Spring contacts provide both the connections to the chip and to the external terminals, and these are resistant to mechanical and thermal shock.

Each spring clip provides a gas tight joint providing resistance against vibration and avoiding the use of solder.

Each spring clip can be provided over the top edge of a respective side wall.

The container can be formed from a plastics material and the spring clips can comprise silver plated metal clips. The carrier device is thus a low cost device and is easily assembled and installed.

Each spring clip may comprise a locking tab in the inner face for engaging with a recess in the corresponding side wall, thereby locking the spring clip over a the side wall. A contact bump may be provided on the inner face.

The carrier device of the invention is preferably used to retain an electromagnetic suppression device, for example for mounting within the housing of an electric motor. The invention also provides the assembled suppression arrangement and also an electric motor housing using such a suppression arrangement.

An example of the invention will now be described in detail with reference to the accompanying drawings, in which:
Figure 1 shows a known package design for an EMI suppression chip;
Figure 2 shows a carrier device of the invention;
Figures 3A and 3B show two different versions of spring clip for use in the carrier device of Figure 2;
Figure 4 shows a carrier device of the invention housing a suppression chip;
Figure 5 shows the underside of the carrier device;
Figure 6 shows the carrier device installed in a housing; and
Figure 7 shows a motor housing of the invention.

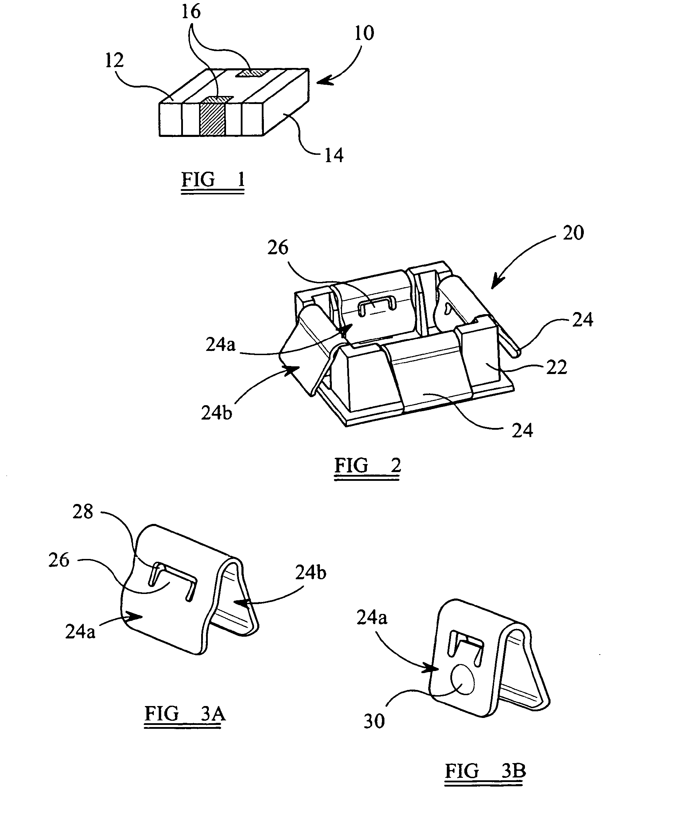

Figure 1 shows a three terminal EMI suppression chip designed for soldering to solder lands, as a surface mount component. The chip 10 has positive and negative connections 12, 14 provided as conductive coatings at each end of the chip package, as well as ground connections 16 provided on opposite side faces o the chip package.

The invention provides a carrier device 20, as shown in Figure 2, which receives the suppression chip of Figure 1 as a push fit connection. The carrier device 20 comprises a plastics housing 22 which is shaped as a rectangular container having four side walls and an open top. A spring contact clip 24 is provided over the top edge of each side wall.

Each spring clip has an inner face 24a facing into the space defined by the housing 22, and an outer face 24b which faces away from the housing 22. The inner and outer faces of each spring clip 24 are biased into an open position, and it will become apparent from the description below that the clips are compressed in the installed device. The spring clips 24 are thus designed to provide mechanical and electrical connection between the suppression chip mounted within the housing 22 and external contact terminals.

Figures 3A and 3B show two different designs for the spring clip. In each case, the inner face 24a of the spring clip has a tab 26 defined by a cut out portion 28. The tab 26 is bent inwardly towards the outer face 24b. The tabs 26 hold the clips 24 over the side walls of the housing 22. In the example of Figure 3B, a contact bump 30 is provided on the inner face 24a.

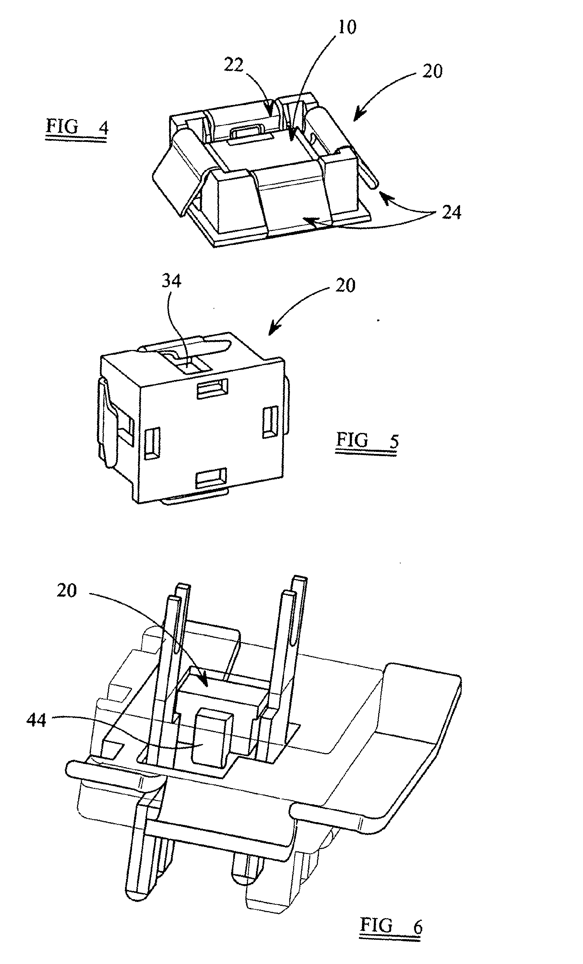

Figure 4 shows the carrier device with a suppression chip 10 received in the housing 22. Each of the four spring clips 24 makes electrical contact with one of the contact pads of the suppression chip 10. Figure 5 shows the base of the carrier device 20, but also shows that the side walls of the housing 22 are each provided with a slot 34, and the tab 26 of each spring clip is arranged to cooperate with the slot 34 so that the spring clips 24 cannot easily be removed from the carrier device. In particular, when the suppression chip 10 is in position, the spring clips 24 are urged outwardly, and this causes the tabs 26 to be biased into the slots 34.

Figure 6 shows a housing for receiving the carrier device of the invention. As part of the moulding of the housing, positive and negative terminals 40, 42 are defined, as well as ground terminals 44. The carrier device 20 of the invention is thus arranged as a push fit into a cradle defined by the terminals 40, 42, 44, so that again no soldering is required. When the carrier device 20 is mounted within the housing as shown in Figure 6, the spring clips 24 are compressed between a respective terminal 40, 42, 44 and a respective contact area of the suppression chip 10. In this way, the spring clips 24 provide mechanical retention both of the carrier device and the suppression chip, as well as electrical connection between the terminals and the contact pads of the carrier chip. The contact terminals 40, 42, 44 may for example comprise plated regions of the moulded housing for receiving the carrier device.

The design of the housing 22 of the carrier device 20 may provide mechanical locking of the carrier device into position. As shown in Figure 4, the base of the housing 22 may be provided with a peripheral flange, and this provides a seating function.

Various arrangements of tabs or clips are of course possible to retain the carrier device in a desired position within the housing.

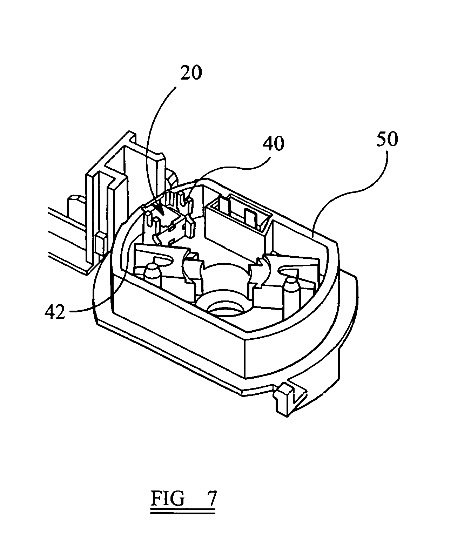

By way of example, Figure 7 shows the carrier device of the invention housed within a motor housing 50. Figure 7 shows the positive and negative terminals 40, 42, and shows the carrier device 20 mounted within the motor casing, which functions as a Faraday cage.

The design of the suppression chip 10 has not been described in detail above, as these devices are readily commercially available.

In the example above, the spring clips are provided over the side walls. They may instead pass through the side wall or through the base.

Various modifications to the carrier device design will be apparent to those skilled in the art.

## Claims

1. A carrier device (20) for carrying an electromagnetic suppression chip (10), the device (20) comprising:
a container (22) having four side walls and an open top, the open top for receiving a suppression chip (10) into the container (22); and being **characterised by**
a plurality of spring clips (24), each spring clip (24) being associated with a respective side wall, and each spring clip (24) having an inner face (24a) for contact with a lateral contact terminal (12, 14, 16), of the suppression chip (10) and an outer face (246) for contact with a terminal (40, 42, 44), external to the carrier device (20), the carrier device (20) being adapted to be received as a push fit into a housing which defines the external terminals (40, 42, 44).

2. A device as claimed in claim 1, wherein the push fit of the carrier device (20) carrying the suppression chip (10) into the housing is adapted to compress the spring clips (24).

3. A device as claimed in claim 1 or 2, wherein each spring clip (24) is provided over the top edge of a respective side wall.

4. A device as claimed in claim 1, 2 or 3, wherein the container (22) is formed from a plastics material.

5. A device as claimed in any preceding claim, wherein the spring clips (24) comprise silver plated metal clips.

6. A device as claimed in any preceding claim, wherein each spring clip (24) comprises a locking tab (26) in the inner face for engaging with a recess (34) in the corresponding side wall, thereby locking the spring clip (24) over a the side wall.

7. A device as claimed in any preceding claim, wherein each spring clip (44) comprises a contact bump (30) on the inner face.

8. An electromagnetic suppression device comprising a carrier device (20) as claimed in any preceding claim and an electromagnetic suppression chip (10) retained within the carrier device (20).

9. A suppression device as claimed in claim 8, for mounting within the housing (50) of an electric motor.

10. An electric motor housing (50) comprising:
an outer housing (50);
a suppression device as claimed in claim 9 mounted within the outer housing; and
a plurality of terminals (40, 42, 44), each contacting the outer face of a respective spring clip (24).

11. An electric motor as claimed in claim 10, wherein the terminals comprise a positive terminal (40) for contacting the outer surface of the spring clip (24) at one end of the container (22), a negative terminal (42) for contacting the outer surface of the spring clip (24) at an opposite end of the container (22), and at least one ground terminal (44) for contacting the outer surface of the spring clip (24) at a side of the container (22).

## Patentansprüche

1. Trägervorrichtung (20) zum Tragen eines Chips (10) zur Unterdrückung elektromagnetischer Störungen, welche Vorrichtung (20) enthält:
einen Behälter (22) mit vier Seitenwänden und einer offenen Oberseite, welche offene Oberseite zum Aufnehmen eines Unterdrückungs-Chips (10) in den Behälter (22) dient; und **gekennzeichnet ist durch**
eine Vielzahl von Federklammern (24), wobei jede Federklammer (24) einer jeweiligen Seitenwand zugeordnet ist und jede der Federklammern (24) eine Innenfläche (24a) für den Kontakt mit einem seitlichen Kontaktanschluss (12, 14, 16) des Unterdrückungs-Chips (10) und eine Außenfläche (24b) für den Kontakt mit einem Anschluss (40, 42, 44) außerhalb der Trägervorrichtung (20) hat, welche Trägervorrichtung (20) dafür ausgelegt ist, dass sie in einer Einschubpassung in einem Gehäuse aufgenommen wird, das die äußeren Anschlüsse (40, 42, 44) bildet.

2. Vorrichtung nach Anspruch 1, bei welcher die Einschubpassung der Trägervorrichtung (20), die den Unterdrückungs-Chip (10) trägt, dafür ausgelegt ist, dass sie die Federklammern (24) zusammendrückt.

3. Vorrichtung nach Anspruch 1 oder 2, bei welcher jede Federklammer (24) über dem oberen Rand einer jeweiligen Seitenwand vorgesehen ist.

4. Vorrichtung nach Anspruch 1, 2 oder 3, bei welcher der Behälter (22) aus einem Kunststoffmaterial gebildet ist.

5. Vorrichtung nach einem der vorstehenden Ansprüche, bei welcher die Federklammern (24) mit Silber überzogene Metallklammern umfassen.

6. Vorrichtung nach einem der vorstehenden Ansprüche, bei welcher jede Federklammer (24) eine Einrastzunge (26) in der Innenfläche für den Eingriff in eine Ausnehmung (34) in der entsprechenden Seitenwand aufweist, so dass **dadurch** die Federklammer (24) über einer Seitenwand einrastet.

7. Vorrichtung nach einem der vorstehenden Ansprüche, bei welcher jede Federklammer (24) einen Kontakthöcker (30) auf der Innenfläche aufweist.

8. Vorrichtung zur Unterdrückung elektromagnetischer Störungen, enthaltend eine Trägervorrichtung (20) nach einem der vorstehenden Ansprüche und einen Chip (10) zur Unterdrückung elektromagnetischer Störungen, der innerhalb der Trägervorrichtung (20) gehalten ist.

9. Unterdrückungs-Vorrichtung nach Anspruch 8 zur Anbringung innerhalb des Gehäuses (50) eines Elektromotors.

10. Elektromotorgehäuse (50), enthaltend:
ein äußeres Gehäuse (50);
eine Unterdrückungs-Vorrichtung nach Anspruch 9, die innerhalb des äußeren Gehäuses montiert ist; und
eine Vielzahl von Anschlüssen (40, 42, 44), von welchen jeder mit der Außenfläche einer jeweiligen Federklammer (24) in Kontakt steht.

11. Elektromotor nach Anspruch 10, bei welchem die Anschlüsse einen positiven Anschluss (40) für den Kontakt mit der äußeren Oberfläche der Federklammer (24) an einem Ende des Behälters (22), einen negativen Anschluss (42) für den Kontakt mit der äußeren Oberfläche der Federklammer (24) an einem entgegengesetzten Ende des Behälters (22) und mindestens einen Erdungsanschluss (44) für den Kontakt mit der äußeren Oberfläche der Federklammer (24) an einer Seite des Behälters (22) umfassen.

## Revendications

1. Dispositif porteur (20) pour porter une puce de suppression électromagnétique (10), le dispositif (20) comprenant :
un conteneur (22) ayant quatre parois latérales et un sommet ouvert, le sommet ouvert étant destiné à recevoir une puce de suppression (10) dans le conteneur (22), et **caractérisé par** :
une pluralité de clips-ressorts (24), chaque clip-ressort (24) étant associé à une paroi latérale respective, et chaque clip-ressort (24) présente une face intérieure (24a) pour venir en contact avec une borne de contact latérale (12, 14, 16) de la puce de suppression (10), et une face extérieure (24b) pour venir en contact avec une borne (40, 42, 44) externe au dispositif porteur (20), le dispositif porteur (20) étant adapté à être reçu assemblé par poussée dans un boîtier qui définit les bornes externes (40, 42, 44).

2. Dispositif selon la revendication 1, dans lequel l'assemblage par poussée du dispositif porteur (20) portant la puce de suppression (10) à l'intérieur du boîtier est adapté à comprimer les clips-ressorts (24).

3. Dispositif selon la revendication 1 ou 2, dans lequel chaque clip-ressort (24) est prévu par-dessus la bordure supérieure d'une paroi latérale respective.

4. Dispositif selon la revendication 1, 2 ou 3, dans lequel le conteneur (22) est formé en matière plastique.

5. Dispositif selon l'une quelconque des revendications précédentes, dans lequel les clips-ressorts (24) comprennent des clips métalliques plaqués à l'argent.

6. Dispositif selon l'une quelconque des revendications précédentes, dans lequel chaque clip-ressort (24) comprend une patte de blocage (26) dans la face intérieure pour s'engager dans un évidement (34) dans la paroi latérale correspondante, bloquant ainsi le clip-ressort (24) par-dessus la paroi latérale.

7. Dispositif selon l'une quelconque des revendications précédentes, dans lequel chaque clip-ressort (24) comprend une bosse de contact (30) sur la face intérieure.

8. Dispositif de suppression électromagnétique comprenant un dispositif porteur (20) selon l'une quelconque des revendications précédentes, et une puce de suppression électromagnétique (10) retenue à l'intérieur du dispositif porteur (20).

9. Dispositif de suppression selon la revendication 8, destiné à être monté dans le boîtier (50) d'un moteur électrique.

10. Boîtier de moteur électrique (50), comprenant :
un boîtier extérieur (50) ;
un dispositif de suppression selon la revendication 9 monté dans le boîtier extérieur ; et
une pluralité de bornes (40, 42, 44), venant chacune en contact avec la face extérieure d'un clip-ressort respectif (24).

11. Moteur électrique selon la revendication 10, dans lequel les bornes comprennent une borne positive (40) pour venir en contact avec la surface extérieure du clip-ressort (24) à une extrémité du conteneur (22), une borne négative (42) pour venir en contact avec la surface extérieure du clip-ressort (24) à une extrémité opposée du conteneur (22), et au moins une borne de masse (44) pour venir en contact avec la surface extérieure du clip-ressort (24) au niveau d'un côté du conteneur (22).
